# EUROPEAN PATENT APPLICATION

(11) **EP 4 722 185 A1**
(43) Date of publication of application: **08.04.2026**
(21) Application number: 24842487.1
(22) Date of filing: 02.07.2024
(51) Int. Cl.: C04B 41/89, B05D 5/06

(54) **METHOD FOR PRODUCING A CERAMIC TILE WITH AN IRIDESCENT EFFECT AND RESULTING CERAMIC TILE ACCORDING TO THE METHOD**

(30) Priority: 18.07.2023 ES 202330614
(71) Applicant: Torrecid, S.A., 12110 Alcora (Castellón) (ES)
(72) Inventor: RUIZ VEGA, Óscar, 12110 Alcora (Castellón) (ES)
(74) Representative: Carlos Hernando, Borja
(86) International application number: PCT/ES2024/070419
(87) International publication number: WO 2025/017226

(57) **Abstract**

The present invention relates to a ceramic tile with an iridescent effect and to a method for producing ceramic tiles with an iridescent effect after being subjected to a firing cycle at a maximum temperature of between 850°C and 1250°C.

## Description

The present invention relates to a ceramic tile with an iridescent effect and to a method for producing ceramic tiles with an iridescent effect after being subjected to a firing cycle at a maximum temperature of between 850°C and 1250°C.

### PRIOR ART

The ceramic sector is currently immersed in the development and application of technologies, processes and products that provide a wide range of aesthetic effects to ceramic tiles. Such is the case with effects that take advantage of interaction with light. In this regard, the existence of manufacturing processes for ceramic tiles with effects based on light reflection is widely known in the prior art. Patent application CN11184822A1 describes a process for producing a ceramic tile with a metallic gloss, which comprises: preparing dry metal particles; depositing a dry granular glaze containing the metal particles on the ceramic tile; applying a protective glaze; firing the piece; and finally polishing it to obtain a metallic gloss effect. In this case, the metal particles responsible for the metallic luster effect are Fe₂O₃, SnO₂, NiO, and Cr₂O₃, which, combined with B₂O₃, generate crystals of different colors. However, application CN11184822A1 has a number of limitations. Firstly, the effect achieved is not iridescent due to the presence of discrete particles that cause iridescence, but rather a metallic luster effect (metallic mirror) over the entire surface. In other words, it is a ceramic tile the surface of which is a mirror with non-localized iridescence. Furthermore, another limitation is that the application must be dry and directly onto the ceramic tile, i.e., it cannot be applied wet in the form of a suspension and it is not possible to take advantage of the advantages of combining the desired effect on previously glazed surfaces that provide gloss, matte, etc. effects. This translates into a limitation in terms of the aesthetic possibilities of the resulting ceramic tile. A third limitation is that it does not use frit in the dry granular glaze. This requires the application of a protective glaze that acts by binding the particles together and as a base for subsequent polishing. Finally, it should also be noted that the particles that provide the luster effect are characterised by their colour (red Fe₂O₃, white SnO₂, black NiO and green C₂O₃), again limiting the aesthetic possibilities of the ceramic tile as it prevents the application of additional decoration, all this without overlooking the toxicity of oxides such as NiO and C₂O₃.

In turn, patent application CN106518029A1 discloses the preparation of a ceramic tile with a metallic luster effect and relief textures. The method described consists of preparing an atomized material and pressing a ceramic tile substrate, depositing a base glaze by means of a bell, applying a suspension of glaze with a metallic luster effect by means of screen printing, printing a marble design by means of inkjet printing on the areas where the glaze with metallic luster effect has been deposited, printing a glaze with relief effect by means of inkjet printing on the areas where the metallic luster effect glaze has been deposited, applying a transparent glaze by means of a bell and finally firing the ceramic tile. Likewise, patent application CN106518029A1 describes a composition of a glaze with metallic luster effect consisting of a mixture of bentonite, calcite, kaolin, zinc oxide, cerium oxide, and praseodymium oxide. However, application CN106518029A1 has a number of limitations. Firstly, to achieve the metallic luster effect, a base glaze on which to deposit the glaze with metallic luster effect is required. A second limitation is that the metallic luster effect is only achieved by means of combining the aforementioned raw materials, which limits the aesthetic possibilities of ceramic tiles. This is because the effect is the result of generating crystallization during the firing cycle, the precursors of which are the raw materials described.

The present invention solves the limitations of the prior art described above by means of a method for producing a ceramic tile with an iridescent effect and a resulting ceramic tile according to the method

### DESCRIPTION OF THE INVENTION

Throughout the invention and claims, the word "comprises" and variants thereof do not intend to exclude other technical features, additives, components, or steps. Furthermore, the word "comprises" includes the case of "consists of". For those skilled in the art, other objects, advantages, and features of the invention shall be inferred in part from the description and in part from the practice of the invention.

This invention allows the limitations of the prior art to be overcome by means of a method comprising the combination of the following technical aspects: the presence of iridescent particles with a refractive index of between 1.5 and 2.7, the presence, together with the iridescent particles, of frit particles which, during heat treatment, act as a binder of the iridescent particles. Furthermore, the selection of the grammage of frit deposited and of the thermal properties of said frit, specifically the softening temperature and the hemispherical temperature. All of this allows, after the heat treatment, a ceramic tile with an iridescent effect to be obtained.

According to that described above, the first object of the present invention relates to a method for producing a ceramic tile with an iridescent effect comprising:
a. supplying an unglazed ceramic tile or glazed ceramic tile;
b. depositing on the unglazed ceramic tile or glazed ceramic tile:
   i. iridescent particles with a predefined design and a grammage of between 10 g/m² and 2500 g/m², wherein the iridescent particles have a refractive index of between 1.5 and 2.7 and a particle diameter of between 75 micrometers and 600 micrometers;
   ii. frit particles with a predefined design and a grammage of between 10 g/m² and 2500 g/m², wherein the frit particles have a diameter of between 100 micrometers and 600 micrometers, a softening temperature of between 840°C and 1180°C, and a hemispherical temperature of between 870°C and 1235°C;
c. introducing the ceramic tile resulting from the previous steps in a kiln and performing a heat treatment at a maximum temperature of between 850°C and 1250°C, resulting in a fired ceramic tile with an iridescent effect.

Both the iridescent particles and the frit particles are deposited by means of a powder deposition and/or inkjet printing and/or air brushing and/or veil and/or bell and/or disc and/or screen printing and/or roller and/or dry digital decoration station.

Advantageously, the iridescent particles and the frit particles are deposited by means of a powder deposition station, and the method for producing a ceramic tile with an iridescent effect comprises:
a. supplying an unglazed ceramic tile or glazed ceramic tile;
b. depositing on the unglazed ceramic tile or glazed ceramic tile:
   i. iridescent particles, by means of a powder deposition station, with a predefined design and a grammage of between 10 g/m² and 2500 g/m², wherein the iridescent particles have a refractive index of between 1.5 and 2.7 and a particle diameter of between 75 micrometers and 600 micrometers;
   ii. frit particles, by means of a powder deposition station, with a predefined design and a grammage of between 10 g/m² and 2500 g/m², wherein the frit particles have a diameter of between 100 micrometers and 600 micrometers, a softening temperature of between 840°C and 1180°C, and a hemispherical temperature of between 870°C and 1235°C;
c. introducing the ceramic tile resulting from the previous steps in a kiln and performing a heat treatment at a maximum temperature of between 850°C and 1250°C, resulting in a fired ceramic tile with an iridescent effect.

The term "predefined design", as used in the present invention, refers to a printing or deposition pattern defining the area where the iridescent particles, the frit particles, the glaze, or the ink referred to in the present invention are to be printed or deposited. This pattern may cover both a percentage of the surface of the ceramic tile and 100% of the surface of the ceramic tile.

One advantage of the present invention is that it allows the ceramic tile supplied at the beginning of the method may be unglazed or glazed since the desired iridescent effect is obtained in both cases. The difference can be seen in the effect of the surface on which the iridescent particles are deposited. In the case of an unglazed ceramic tile, the iridescent effect is obtained on a surface showing the color of the support. For example, if a ceramic tile which is formulated with raw materials providing a white support is used, the ceramic tile resulting from applying the method according to the present invention relates to a fired ceramic tile with an iridescent effect on the white base of the ceramic tile. If, alternatively, the ceramic tile is glazed, the ceramic tile resulting from applying the method according to the present invention relates to a fired ceramic tile with an iridescent effect on a base with an effect resulting from the composition of the ceramic glaze previously deposited. Examples of effects of the ceramic glaze previously deposited, by way of non-limiting example, are transparent gloss, opaque gloss, opaque matte, transparent matte, satin matte, white, luster, metallic, among others. Furthermore, this ceramic glaze previously deposited on the ceramic tile comprises both a single layer of ceramic glaze and several layers resulting from the combination of several types of ceramic glaze.

The iridescent effect in the present invention requires the selection of particles, referred to as iridescent particles, which are characterized by having a refractive index of between 1.5 and 2.7 and a particle size of between 75 micrometers and 600 micrometers. In this sense, the iridescent particles are selected from the group comprising, by way of non-limiting example, tungsten(III) oxide, sillimanite, manganese dioxide, cordierite, sodium feldspar, potassium feldspar, corundum, mullite, wollastonite, zirconium silicate, tin dioxide, zirconium(IV) oxide, kyanite, micas, rutile, anatase, grit, and quartz, or a mixture thereof. The term grit, as used in the present invention, refers to a frit which has been subjected to grinding and sieving in order to adapt it to a specific particle diameter interval.

Given that the combination of iridescent particles and frit particles is necessary, in a preferred embodiment, the present invention contemplates the option that both types of particles are deposited on the unglazed ceramic tile or glazed ceramic tile, from a mixture thereof, with a predefined design and a grammage of between 10 g/m² and 2500 g/m². This mixture comprises iridescent particles between 1% and 50% by weight of the total mixture and frit particles between 50% and 99% by weight of the total mixture. The iridescent effect is more or less intense depending on the amount of iridescent particles deposited. Furthermore, starting from a mixture allows both types of particles to be deposited in a single step and with a single piece of deposition equipment.

In any case, the method according to the present invention allows the iridescent effect to be obtained on the ceramic tile regardless of the technique for depositing the different components. In this sense, both the iridescent particles, and the frit particles or the mixture comprising iridescent particles and frit particles can be deposited, as mentioned above, in addition to with a powder deposition station, by means of inkjet printing, air brushing, veil, bell, disc, screen printing, roller or dry digital decoration.

Likewise, the present invention also contemplates the possibility of the iridescent particles and/or the frit particles being deposited in a ceramic glaze by means of a glazing station with a predefined design and a grammage of between 10 g/m² and 2500 g/m². The glazing station can utilize techniques such as inkjet printing, air brushing, veil, bell, disc, screen printing or roller. This option opens up the possibility of simultaneously obtaining in the glazed ceramic tile or unglazed ceramic tile the iridescent effect and other effects provided by the remaining components of the ceramic glaze. Examples of effects of the ceramic glaze containing the iridescent particles and/or the frit particles, by way of non-limiting example, are transparent gloss, opaque gloss, opaque matte, transparent matte, satin matte, opaque white, luster, metallic, with color, among others.

Another option for providing aesthetic value to the ceramic tile is by means of decorating the unglazed ceramic tile or glazed ceramic tile with at least one decorative ink providing chromatic effects (cyan, cobalt blue, brown, red, magenta, yellow, green, black, opaque white, grey, etc.) or ceramic effects (transparent gloss, opaque gloss, opaque matte, transparent matte, satin matte, opaque white, metallic, luster, etc.). **In** this regard, the present invention contemplates a preferred embodiment where, prior to the step of depositing the iridescent particles and/or prior to the step of depositing the frit particles and/or prior to the step of depositing the mixture comprising the iridescent particles and the frit particles and/or prior to the step of depositing the ceramic glaze, at least one decorative ink is printed, by means of an inkjet printing or air brushing or veil or bell or disc or screen printing or roller printing station with a predefined design and a grammage of between 10 g/m² and 1000 g/m².

Advantageously, the thickness of the layer of frit completely or partially covering the iridescent particles, at least in one of the Cartesian planes according to the X, Y, or Z axes, must be between 50 micrometers and 1000 micrometers.

In cases where the deposition of the particles is performed under dry conditions, i.e., without the use of a suspension of the particles in a liquid medium, the present invention allows for using an adhesive ink that helps fix the particles on the surface of the ceramic tile. In this sense, a preferred embodiment is characterized in that prior to the step of depositing the iridescent particles and/or prior to the step of depositing the frit particles and/or prior to the step of depositing the mixture of the iridescent particles and the frit particles, an ink with adhesive properties is printed by means of an inkjet printing or air brushing or veil or bell or disc or screen printing or roller printing station with a predefined design and a grammage of between 20 g/m² and 250 g/m². Additionally, after the step of fixing the particles with adhesive ink, i.e., after depositing the ink with adhesive properties and the iridescent particles and/or the frit particles and/or the mixture comprising the iridescent particles and the frit particles, the option of again depositing the ink with adhesive properties by means of an inkjet printing or air brushing or veil or bell or disc or screen printing or roller printing station with a predefined design and a grammage of between 20 g/m² and 250 g/m² is allowed for. This adhesive ink printing station can either be the same one used previously or else an additional printing station. This allows a higher fixing power of the particles in cases where, for different reasons, there is a risk of the ceramic tile, prior to heat treatment, is subjected to sudden movements that may displace the particles deposited according to the predefined design. It should be noted that currently the entire process described can also be carried out by means of dry digital decoration equipment where both the printing of the adhesive ink by means of inkjet printing technology and the deposition of the particles is performed in a single piece of equipment. As a possible complementary step to all the previous steps, the present invention also comprises the option of removing the excess particles or particles that are not adhered to the adhesive ink by means of a suction or blowing device, after each step of deposition.

As indicated above, the present invention includes a heat treatment at a temperature of between 850°C and 1250°C. The selection of the temperature shall be determined by the type of frits and glazes used. In this regard, this heat treatment can be performed in a natural gas firing kiln commonly used in the sector of ceramic tiles.

According to that set forth above, during the heat treatment the frit particles melt and surround the iridescent particles, such that once said heat treatment has ended, a surface completely or partially covering the ceramic tile is obtained, where the iridescent particles are embedded in the matrix comprising the frit resulting from said heat treatment. If the frit particles have been applied in the form of a ceramic glaze, the surface where the iridescent particles are embedded is the surface resulting from the heat treatment of said ceramic glaze, i.e., of the frit particles and of other glass or crystalline components that said ceramic glaze may comprise. In this sense, the technical result in any of the cases is that each of the iridescent particles is surrounded completely or partially in the Cartesian planes according to the X and/or Y and/or Z axes, by a layer comprising the frit particles and the thickness of said layer is of between 50 micrometers and 1000 micrometers. Additionally, said thickness can also be adjusted by means of a step of polishing after the heat treatment, using a polishing station. In this regard, the step of polishing is a widely used technique in the sector of ceramic tiles to achieve different objectives, such as reducing the thickness of the outermost surface layer, decreasing its roughness, generating surfaces with more gloss and specular reflection, among others.

Taking into consideration all that described above, the second object of the present invention relates to a ceramic tile with an iridescent effect according to the method described, in particular, a ceramic tile in which each of the iridescent particles is completely or partially surrounded by a layer of frit such that the thickness (E) of said layer of frit is of between 50 micrometers and 1000 micrometers in the Cartesian planes according to the X and/or Y and/or Z axes.

Lastly, it should be noted that the method for producing a ceramic tile with an iridescent effect according to the present invention does not limit the inclusion or incorporation of other processes or steps that provide other aesthetic, technical, or functional properties in addition to those which are protected in this invention, both before and after the heat treatment.

Other features of the present invention can be drawn from the claims, figures, and the description of the figures. The features and combinations of the features mentioned above in the description, as well as the features and combinations of features mentioned below in the description of the figures and/or shown alone in the figures and/or described in the preferred embodiments, can be used not only in the combination indicated in each case, but also in other combinations, without departing from the scope of the invention. Therefore, it should be understood that those embodiments of the invention that are not explicitly shown in the figures or explained, but which may be drawn from the combinations of separate features of the embodiments set forth, and which can be generated from them, are also comprised in and disclosed by the invention. Accordingly, those embodiments and combinations of features that do not present all the features of an originally formulated independent claim shall also be regarded as disclosed. Where the technical features mentioned in any claim are followed by reference symbols, those reference symbols have been included for the sole purpose of increasing the intelligibility of the claims and, accordingly, these reference signs have no effect limiting on the interpretation of each element identified by way of example by these reference signs.

### DESCRIPTION OF THE FIGURES

In the figures, identical elements or elements having an identical function are indicated by the same reference symbols.

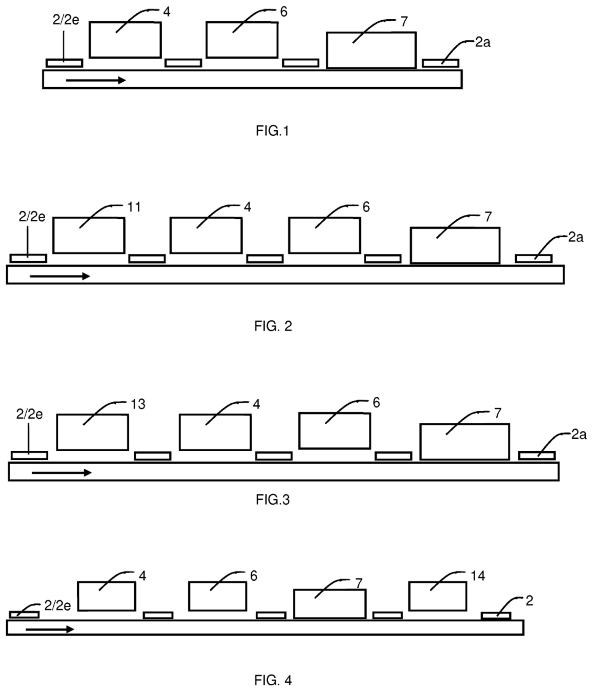

Figure 1 schematically depicts the method for producing a ceramic tile with an iridescent effect according to the invention. In this sense, the method follows the direction indicated by the arrow, i.e., from left to right, starting with the supply of the unglazed ceramic tile 2 or glazed ceramic tile 2e. Right after that, said ceramic tile 2 / 2e moves on to the powder deposition station 4 where the iridescent particles 3 are deposited with a predefined design and a grammage of between 10 g/m² and 2500 g/m². Next, the ceramic tile moves on to a powder deposition station 6 where the frit particles 5 are deposited with a predefined design and a grammage of between 10 g/m² and 2500 g/m². The method ends with the entry of the ceramic tile into a kiln 7 where it is subjected to a heat treatment at a maximum temperature of between 850°C and 1250°C. Once the heat treatment has ended, a fired ceramic tile 2a with an iridescent effect resulting from the method according to the invention is obtained.
Figure 2 schematically depicts the method for producing a ceramic tile with an iridescent effect which includes, in addition to the method depicted in Figure 1, a printing station 11 for the printing of at least one decorative ink according to the invention. In this sense, the method follows the direction indicated by the arrow, i.e., from left to right, starting with the supply of the unglazed ceramic tile 2 or glazed ceramic tile 2e. Right after that, said ceramic tile 2 / 2e moves on to the inkjet printing or air brushing or veil or bell or disc or screen printing or roller printing station 11, where at least one decorative ink 10 is printed with a predefined design and a grammage of between 10 g/m² and 1000 g/m². Subsequently, the ceramic tile 2 / 2e moves on to the powder deposition station 4 where the iridescent particles 3 are deposited with a predefined design and a grammage of between 10 g/m² and 2500 g/m². Next, the ceramic tile moves on to a powder deposition station 6 where the frit particles 5 are deposited with a predefined design and a grammage of between 10 g/m² and 2500 g/m². The method ends with the entry of the ceramic tile into a kiln 7 where it is subjected to a heat treatment at a maximum temperature of between 850°C and 1250°C. Once the heat treatment has ended, a fired ceramic tile 2a with an iridescent effect combined with decoration resulting from the method according to the invention is obtained.
Figure 3 schematically depicts the method for producing a ceramic tile with an iridescent effect which includes, in addition to the method depicted in Figure 1, a printing station 13 for the printing of an ink with adhesive properties according to the invention. In this sense, the method follows the direction indicated by the arrow, i.e., from left to right, starting with the supply of the unglazed ceramic tile 2 or glazed ceramic tile 2e. Right after that, said ceramic tile 2 / 2e moves on to the printing station 13, where an ink with adhesive properties 12 is printed by means of an inkjet printing or air brushing or veil or bell or disc or screen printing or roller printing station with a predefined design and a grammage of between 20 g/m² and 250 g/m². Next, the ceramic tile moves on to the powder deposition station 4 where the iridescent particles 3 are deposited with a predefined design and a grammage of between 10 g/m² and 2500 g/m². Subsequently, the ceramic tile moves on to a powder deposition station 6 where the frit particles 5 are deposited with a predefined design and a grammage of between 10 g/m² and 2500 g/m². The method ends with the entry of the ceramic tile into a kiln 7 where it is subjected to a heat treatment at a maximum temperature of between 850°C and 1250°C. Once the heat treatment has ended, a fired ceramic tile 2a with an iridescent effect resulting from the method according to the invention is obtained.
Figure 4 schematically depicts the method for producing a ceramic tile with an iridescent effect which includes, in addition to the method depicted in Figure 1, a polishing station 14 according to the invention. In this sense, the method follows the direction indicated by the arrow, i.e., from left to right, starting with the supply of the unglazed ceramic tile 2 or glazed ceramic tile 2e. Right after that, said ceramic tile 2 / 2e moves on to the powder deposition station 4 where the iridescent particles 3 are deposited with a predefined design and a grammage of between 10 g/m² and 2500 g/m². Next, the ceramic tile moves on to a powder deposition station 6 where the frit particles 5 are deposited with a predefined design and a grammage of between 10 g/m² and 2500 g/m². Subsequently, the ceramic tile enters a kiln 7 where it is subjected to a heat treatment at a maximum temperature of between 850°C and 1250°C. The method ends with the entry of the ceramic tile into a surface polishing station 14. Once the polishing has ended, a fired ceramic tile 2a with an iridescent effect resulting from the method according to the invention is obtained.

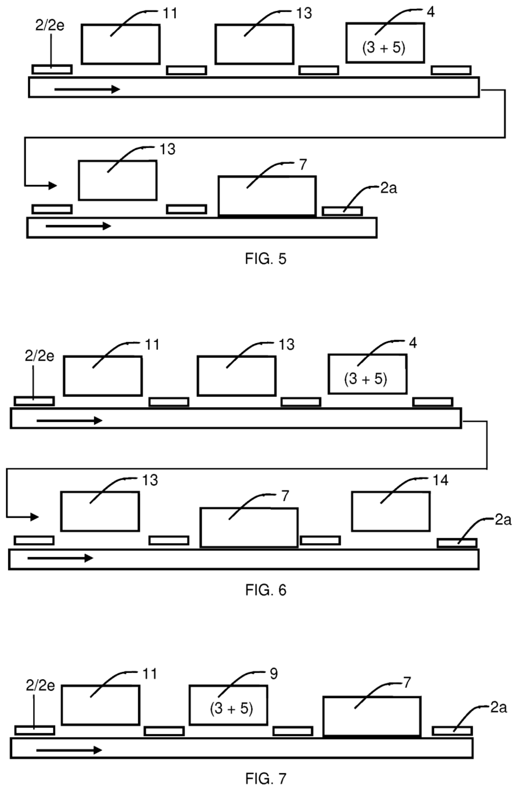

Figure 5 schematically depicts the method for producing a ceramic tile with an iridescent effect which includes, in addition to the method depicted in Figure 1, a printing station 11 for the printing of at least one decorative ink, a printing station 13 for the printing of an ink with adhesive properties, as well as the deposition of a mixture comprising iridescent particles 3 and frit particles 5 according to the invention. In this sense, the method follows the direction indicated by the arrow, i.e., from left to right, starting with the supply of the unglazed ceramic tile 2 or glazed ceramic tile 2e. Right after that, said ceramic tile 2 / 2e moves on to the inkjet printing or air brushing or veil or bell or disc or screen printing or roller printing station 11, where at least one decorative ink 10 is printed with a predefined design and a grammage of between 10 g/m² and 1000 g/m². Subsequently, the ceramic tile moves on to the printing station 13, where an ink with adhesive properties 12 is printed by means of an inkjet printing or air brushing or veil or bell or disc or screen printing or roller printing station with a predefined design and a grammage of between 20 g/m² and 250 g/m². Next, the ceramic tile moves on to the powder deposition station 4 where the mixture comprising iridescent particles 3 and frit particles 5 is deposited with a predefined design and a grammage of between 10 g/m² and 2500 g/m². Right after that, the ceramic tile moves on to the printing station 13, where an ink with adhesive properties 12 is printed by means of an inkjet printing or air brushing or veil or bell or disc or screen printing or roller printing station with a predefined design and a grammage of between 20 g/m² and 250 g/m². The method ends with the entry of the ceramic tile into a kiln 7 where it is subjected to a heat treatment at a maximum temperature of between 850°C and 1250°C. Once the heat treatment has ended, a fired ceramic tile 2a with an iridescent effect resulting from the method according to the invention is obtained.
Figure 6 schematically depicts the method for producing a ceramic tile with an iridescent effect which includes, in addition to the method depicted in Figure 1, a printing station 11 for the printing of at least one decorative ink, a printing station 13 for the printing of an ink with adhesive properties, the deposition of a mixture comprising iridescent particles 3 and frit particles 5 and a final step of surface polishing 14 according to the invention. In this sense, the method follows the direction indicated by the arrow, i.e., from left to right, starting with the supply of the unglazed ceramic tile 2 or glazed ceramic tile 2e. Right after that, said ceramic tile 2 / 2e moves on to the inkjet printing or air brushing or veil or bell or disc or screen printing or roller printing station 11, where at least one decorative ink 10 is printed with a predefined design and a grammage of between 10 g/m² and 1000 g/m². Subsequently, the ceramic tile moves on to the printing station 13, where an ink with adhesive properties 12 is printed by means of an inkjet printing or air brushing or veil or bell or disc or screen printing or roller printing station with a predefined design and a grammage of between 20 g/m² and 250 g/m². Next, the ceramic tile moves on to the powder deposition station 4 where the mixture comprising iridescent particles 3 and frit particles 5 is deposited with a predefined design and a grammage of between 10 g/m² and 2500 g/m². Right after that, the ceramic tile moves on to the printing station 13, where an ink with adhesive properties 12 is printed by means of an inkjet printing or air brushing or veil or bell or disc or screen printing or roller printing station with a predefined design and a grammage of between 20 g/m² and 250 g/m². Subsequently, the ceramic tile enters a kiln 7 where it is subjected to a heat treatment at a maximum temperature of between 850°C and 1250°C. The method ends with the entry of the ceramic tile into a surface polishing station 14. Once the polishing process has ended, a fired ceramic tile 2a with an iridescent effect resulting from the method according to the invention is obtained.
Figure 7 schematically depicts the method for producing a ceramic tile with an iridescent effect which includes, in addition to the method depicted in Figure 1, a printing station 11 for the printing of at least one decorative ink, and the powder deposition station 4 is replaced with a glazing station 9 for the deposition of a ceramic glaze comprising at least the iridescent particles and the frit particles according to the invention. In this sense, the method follows the direction indicated by the arrow, i.e., from left to right, starting with the supply of the unglazed ceramic tile 2 or glazed ceramic tile 2e. Right after that, said ceramic tile 2 / 2e moves on to the inkjet printing or air brushing or veil or bell or disc or screen printing or roller printing station 11, where at least one decorative ink 10 is printed with a predefined design and a grammage of between 10 g/m² and 1000 g/m². Subsequently, the ceramic tile 2 / 2e moves on to the inkjet printing or air brushing or veil or bell or disc or screen printing or roller glazing station 9, where a ceramic glaze comprising at least the iridescent particles 3 and the frit particles 5 is deposited with a predefined design and a grammage of between 10 g/m² and 2500 g/m². The method ends with the entry of the ceramic tile into a kiln 7 where it is subjected to a heat treatment at a maximum temperature of between 850°C and 1250°C. Once the heat treatment has ended, a fired ceramic tile 2a with an iridescent effect resulting from the method according to the invention is obtained.

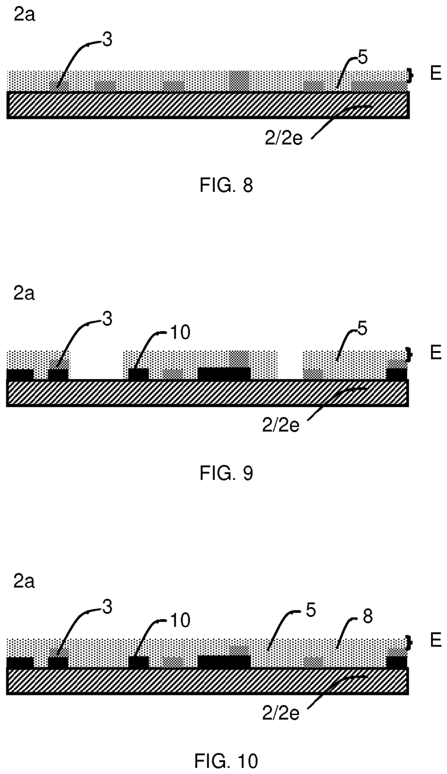

Figure 8 schematically depicts the section of a ceramic tile with an iridescent effect once subjected to the heat treatment 2a, showing a deposition design of iridescent particles 3 on the XY plane of the unglazed ceramic tile 2 or glazed ceramic tile 2e and a design of frit particles 5 resulting from the heat treatment, such that they completely or partially surround the iridescent particles 3 with a thickness E of between 50 micrometers and 1000 micrometers in the Cartesian planes according to the X and/or Y and/or Z axes according to the invention. Additionally, the thickness E can be adjusted by means of a polishing process after the heat treatment according to the invention.
Figure 9 schematically depicts the section of a ceramic tile with an iridescent effect once subjected to the heat treatment 2a, showing a decorative design of the ink printing 10 on the XY plane of the unglazed ceramic tile 2 or glazed ceramic tile 2e, a deposition design of iridescent particles 3 in the same plane, and a design of frit particles 5 resulting from the heat treatment, such that they completely or partially surround the iridescent particles 3 with a thickness E of between 50 micrometers and 1000 micrometers in the Cartesian planes according to the X and/or Y and/or Z axes according to the invention. Additionally, the thickness E can be adjusted by means of a polishing process after the heat treatment according to the invention.
Figure 10 schematically depicts the ceramic tile with an iridescent effect once subjected to the heat treatment 2a, showing a decorative design of the ink printing 10 on the XY plane of the unglazed ceramic tile 2 or glazed ceramic tile 2e and a deposition design of ceramic glaze 8 in the same plane comprising the iridescent particles and the frit particles resulting from the heat treatment. In this sense, as a result of the heat treatment, the frit particles 5 completely or partially surround the iridescent particles 3 with a thickness E of between 50 micrometers and 1000 micrometers in the Cartesian planes according to the X and/or Y and/or Z axes according to the invention. Additionally, the thickness E can be adjusted by means of a polishing process after the heat treatment according to the invention.

### PREFERRED EMBODIMENTS

The present invention is explained in further detail by means of preferred embodiments. The following examples are provided by way of illustration and are not intended to be limiting of the present invention. Furthermore, the present invention covers all the possible combinations of particular and preferred embodiments indicated herein.

### Example 1.

A ceramic tile with an iridescent effect according to the invention was prepared, where the following steps were followed:
a. Supplying an unglazed porcelain ceramic tile 2 formulated with raw materials providing a white support.
b. Depositing on the ceramic tile 2 iridescent corundum particles 3 by means of a powder deposition station 4 with a predefined design and a grammage of 200 g/m², where the corundum particles have a refractive index of between 1.76 and 1.78 and a particle size of between 75 micrometers and 600 micrometers.
c. Depositing on the ceramic tile 2 a frit 5 by means of a powder deposition station 6 with a predefined design and a grammage of 2200 g/m², where the particles of the frit have a particle size of between 200 micrometers and 500 micrometers, a softening temperature of 1068°C, and a hemispherical temperature of 1138°C.
d. Introducing the ceramic tile 2 in a kiln 7 and performing a heat treatment at a maximum temperature of 1230°C.
e. Introducing the ceramic tile resulting from the heat treatment into a polishing station 14 and performing polishing.

As a result of this process, a fired ceramic tile with an iridescent effect (2a) according to the invention was obtained.

### Example 2.

A ceramic tile with an iridescent effect according to the invention was prepared, where the following steps were followed:
a. Supplying a porcelain ceramic tile comprising an engobe-type glaze 2e.
b. Printing on the ceramic tile 2e a predefined design comprising decorative blue, brown, yellow, black, and gloss effect inks 10 by means of an inkjet printing station 11 and a grammage of 30 g/m².
c. Printing on the ceramic tile a predefined design with an ink with adhesive properties 12 by means of an inkjet printing station 13 and a grammage of 100 g/m².
d. Depositing on the ceramic tile a mixture comprising iridescent cordierite particles at 10% by weight of the total mixture, characterized by having a refractive index of between 1.55 and 1.60, a particle size of between 100 micrometers and 450 micrometers; and a frit at 90% by weight of the total mixture, characterized by having a particle size of between 200 micrometers and 500 micrometers, a softening temperature of 1090°C, and a hemispherical temperature of 1145°C. Said mixture was deposited by means of a powder deposition station 4 with a predefined design and a grammage of 500 g/m².
e. Depositing on the ceramic tile an ink with adhesive properties 12 by means of an air brushing printing station 13 with a predefined design and a grammage of 100 g/m².
f. Introducing the ceramic tile into a kiln 7 and performing a heat treatment at a maximum temperature of 1200°C.
g. Introducing the ceramic tile resulting from the heat treatment into a polishing station 14 and performing polishing.

As a result of this process, a fired ceramic tile with an iridescent effect (2a) according to the invention was obtained.

### Example 3.

A ceramic tile with an iridescent effect according to the invention was prepared, where the following steps were followed:
a. Supplying a porous ceramic tile comprising an engobe-type glaze 2e.
b. Depositing on the ceramic tile 2e iridescent grit particles 3 by means of a powder deposition station 4 with a predefined design and a grammage of 300 g/m², where the grit particles have a refractive index of between 1.5 and 2.7 and a particle size of between 100 micrometers and 300 micrometers.
c. Depositing on the ceramic tile 2e a frit 5 by means of a powder deposition station 6 with a predefined design and a grammage of 500 g/m², where the frit particles have a particle size of between 250 micrometers and 400 micrometers, a softening temperature of 990°C, and a hemispherical temperature of 1150°C.
d. Introducing the ceramic tile into a kiln 7 and performing a heat treatment at a maximum temperature of 1140°C.

As a result of this process, a fired ceramic tile with an iridescent effect (2a) according to the invention was obtained.

### Example 4.

A ceramic tile with an iridescent effect according to the invention was prepared, where the following steps were followed:
a. Supplying a porcelain ceramic tile comprising an engobe-type glaze 2e.
b. Printing on the ceramic tile 2e a predefined design comprising decorative inks 10 in cobalt, brown, yellow, black, and transparent matte effect by means of an inkjet printing station 11 and a grammage of 150 g/m².
c. Depositing on the ceramic tile 2e a ceramic glaze with transparent gloss effect comprising a mixture which comprises iridescent quartz particles 3 at 50% by weight of the total mixture, characterized by having a refractive index of between 1.50 and 1.55, a particle size of between 75 micrometers and 300 micrometers; and a frit 5 at 50% by weight of the total mixture, characterized by having a particle size of between 150 micrometers and 300 micrometers, a softening temperature of 1150°C, and a hemispherical temperature of 1160°C. Said mixture was deposited by means of an air brushing glazing station 9 with a predefined design and a grammage of 800 g/m².
d. Introducing the ceramic tile into a kiln 7 and performing a heat treatment at a maximum temperature of 1200°C.

As a result of this process, a fired ceramic tile with an iridescent effect (2a) according to the invention was obtained.

### Example 5.

A ceramic tile with an iridescent effect according to the invention was prepared, where the following steps were followed:
a. Supplying a glazed, decorated, and fired ceramic tile 2e.
b. Printing on the ceramic tile an ink with adhesive properties 12 by means of a roller printing station 13 with a predefined design and a grammage of 100 g/m².
c. Depositing on the ceramic tile a mixture comprising iridescent mica particles 3 at 5% by weight of the total mixture, characterized by having a refractive index of between 1.5 and 2.7, a particle size of between 40 micrometers and 100 micrometers; and a frit 5 at 95% by weight of the total mixture, characterized by having a particle size of between 150 micrometers and 300 micrometers, a softening temperature of 846°C, and a hemispherical temperature of 875°C. Said mixture was deposited by means of a powder deposition station 4 with a predefined design and a grammage of 500 g/m².
d. Introducing the ceramic tile into a kiln 7 and performing a heat treatment at a maximum temperature of 850°C.

As a result of this process, a fired ceramic tile with an iridescent effect (2a) according to the invention was obtained.

### Example 6.

A ceramic tile with an iridescent effect according to the invention was prepared, where the following steps were followed:
a. Supplying a porcelain ceramic tile glazed with a glaze transparent gloss in black 2e.
b. Printing on the ceramic tile 2e a predefined design comprising decorative inks 10 in cobalt, brown, yellow and opaque white by means of an inkjet printing station 11 and a grammage of 75 g/m².
c. Depositing on the ceramic tile a mixture comprising iridescent particles 3 at 30% by weight of the total mixture, in turn comprising 80% quartz particles, characterized by having a refractive index of between 1.50 and 1.55 and 20% tungsten(III) oxide particles, characterized by having a refractive index of between 1.92 and 1.99. This mixture of quartz and tungsten(III) oxide particles has a particle size of between 100 micrometers and 300 micrometers. The other 70% by weight of the total mixture is a frit, characterized by having a particle size of between 1 micrometer and 50 micrometers, a softening temperature of 1142°C, and a hemispherical temperature of 1153°C. Said mixture was deposited by means of a veil glazing station 9 with a predefined design and a grammage of 1200 g/m².
d. Introducing the ceramic tile into a kiln 7 and performing a heat treatment at a maximum temperature of 1200°C.
e. Introducing the ceramic tile resulting from the heat treatment into a polishing station 14 and performing polishing.

As a result of this process, a fired ceramic tile with an iridescent effect (2a) according to the invention was obtained.

## Claims

1. A method for producing a ceramic tile with an iridescent effect comprising at least the following steps:
a. supplying an unglazed ceramic tile (2) or glazed ceramic tile (2e);
b. depositing on the unglazed ceramic tile (2) or glazed ceramic tile (2e):
i. iridescent particles (3) with a predefined design and a grammage of between 10 g/m² and 2500 g/m², wherein the iridescent particles have a refractive index of between 1.5 and 2.7 and a particle diameter of between 75 micrometers and 600 micrometers;
ii. frit particles (5) with a predefined design and a grammage of between 10 g/m² and 2500 g/m², wherein the frit particles have a diameter of between 100 micrometers and 600 micrometers, a softening temperature of between 840°C and 1180°C, and a hemispherical temperature of between 870°C and 1235°C;
c. introducing the ceramic tile resulting from the previous steps in a kiln (7) and performing a heat treatment at a maximum temperature of between 850°C and 1250°C, resulting in a fired ceramic tile with an iridescent effect (2a).

2. The method according to claim 1, wherein both the iridescent particles (3) and the frit particles (5) are deposited by means of a powder deposition and/or inkjet printing and/or air brushing and/or veil and/or bell and/or disc and/or screen printing and/or roller and/or dry digital decoration station.

3. The method according to any of the preceding claims, wherein the iridescent particles (3) and the frit particles (5) are deposited by means of a powder deposition station according to the following steps:
a. supplying an unglazed ceramic tile (2) or glazed ceramic tile (2e);
b. depositing on the unglazed ceramic tile (2) or glazed ceramic tile (2e):
i. iridescent particles (3), by means of a powder deposition station (4) with a predefined design and a grammage of between 10 g/m² and 2500 g/m², wherein the iridescent particles have a refractive index of between 1.5 and 2.7 and a particle diameter of between 75 micrometers and 600 micrometers;
ii. frit particles (5), by means of a powder deposition station (6), with a predefined design and a grammage of between 10 g/m² and 2500 g/m², wherein the frit particles have a diameter of between 100 micrometers and 600 micrometers, a softening temperature of between 840°C and 1180°C, and a hemispherical temperature of between 870°C and 1235°C;
c. introducing the ceramic tile resulting from the previous steps in a kiln (7) and performing a heat treatment at a maximum temperature of between 850°C and 1250°C.

4. The method according to any of the preceding claims, wherein the iridescent particles are selected from the group comprising tungsten(III) oxide, sillimanite, manganese dioxide, cordierite, sodium feldspar, potassium feldspar, corundum, mullite, wollastonite, zirconium silicate, tin dioxide, zirconium(IV) oxide, kyanite, micas, rutile, anatase, grit, and quartz, or a mixture thereof.

5. The method according to any of the preceding claims, wherein the iridescent particles (3) and the frit particles are deposited mixed together after performing a step of mixing (M) to generate a mixture comprising said iridescent particles (3) between 1% and 50% by weight of the total mixture and said frit particles (5) between 50% and 99% by weight of the total mixture.

6. The method according to claim 1, wherein the iridescent particles (3) and/or the frit particles (5) are deposited on the unglazed ceramic tile (2) or glazed ceramic tile (2e) in a ceramic glaze (8) by means of an inkjet printing or air brushing or veil or bell or disc or screen printing or roller glazing station (9) with a predefined design and a grammage of between 10 g/m² and 2500 g/m².

7. The method according to any of the preceding claims, wherein prior to the step of depositing the iridescent particles (3) and/or prior to the step of depositing the frit particles and/or prior to the step of depositing the mixture comprising the iridescent particles (3) and the frit particles (5) and/or prior to the step of depositing the ceramic glaze (8), at least one decorative ink (10) is printed by means of an inkjet printing or air brushing or veil or bell or disc or screen printing or roller printing station (11) with a predefined design and a grammage of between 10 g/m² and 1000 g/m².

8. The method according to any of the preceding claims, wherein prior to the step of depositing the iridescent particles (3) and/or prior to the step of depositing the frit particles (5) and/or prior to the step of depositing the mixture comprising the iridescent particles (3) and the frit particles (5), an ink with adhesive properties (12) is printed by means of an inkjet printing or air brushing or veil or bell or disc or screen printing or roller printing station (13) with a predefined design and a grammage of between 20 g/m² and 250 g/m².

9. The method according to the preceding claim, wherein after the step of depositing the iridescent particles (3), or after the step of depositing the frit particles (5), or after the step of depositing the mixture comprising the iridescent particles (3) and the frit particles (5), the ink with adhesive properties (12) is printed again by means of an inkjet printing or air brushing or veil or bell or disc or screen printing or roller printing station with a predefined design and a grammage of between 20 g/m² and 250 g/m².

10. The method according to any of claims 8 or 9, wherein the printing of the ink with adhesive properties (12) and the iridescent particles (3) and/or the frit particles (5) and/or the mixture comprising the iridescent particles (3) and the frit particles (5) is performed by means of dry digital decoration equipment.

11. The method according to any of the preceding claims, wherein the heat treatment is performed with a natural gas firing kiln (7) commonly used in the ceramic sector.

12. The method according to any of the preceding claims, wherein after firing, each of the iridescent particles is completely or partially surrounded by a layer of frit such that the thickness (E) of said layer of frit is between 50 micrometers and 1000 micrometers in the Cartesian planes according to the X and/or Y and/or Z axes.

13. The method according to the preceding claim, wherein the thickness of the layer of frit is obtained by means of a step of surface polishing after the heat treatment using a polishing station (14).

14. A ceramic tile with an iridescent effect (2a) manufactured according to the method described in any one of the preceding claims.

15. The ceramic tile according to claim 14, **characterized in that** each of the iridescent particles is completely or partially surrounded by a layer of frit such that the thickness (E) of said layer of frit is of between 50 micrometers and 1000 micrometers in the Cartesian planes according to the X and/or Y and/or Z axes.
